# EUROPÄISCHE PATENTSCHRIFT

(11) **EP 1 276 811 B1**
(45) Veröffentlichungstag und Bekanntmachung des Hinweises auf die Patenterteilung: **09.02.2005**
(21) Anmeldenummer: 01931625.6
(22) Anmeldetag: 19.04.2001
(51) Int. Cl.: C08L 59/00, B22F 3/10, B22F 3/22, C08K 3/00

(54) **BINDEMITTEL FÜR ANORGANISCHE MATERIALPULVER ZUR HERSTELLUNG METALLISCHER UND KERAMISCHER FORMKÖRPER**
BINDING AGENT FOR INORGANIC MATERIAL POWDERS FOR PRODUCING METALLIC AND CERAMIC MOULDED BODIES
LIANT POUR MATERIAU PULVERULENT INORGANIQUE DESTINE A LA PRODUCTION DE PIECES MOULEES METALLIQUES ET CERAMIQUES

(30) Priorität: 19.04.2000 DE 10019447
(43) Veröffentlichungstag der Anmeldung: 22.01.2003
(73) Patentinhaber: BASF AKTIENGESELLSCHAFT, 67056 Ludwigshafen (DE)
(72) Erfinder: BLÖMACHER, Martin, 67149 Meckenheim (DE); WEINAND, Dieter, 67434 Neustadt (DE); WOHLFROMM, Hans, 68163 Mannheim (DE); TER MAAT, Johan, Herman, Hendrik, 68163 Mannheim (DE)
(74) Vertreter: Isenbruck, Günter
(86) Internationale Anmeldenummer: PCT/EP2001/004448
(87) Internationale Veröffentlichungsnummer: WO 2001/081467

(56) Entgegenhaltungen:
- EP-A- 0 465 940
- EP-A- 0 710 516
- US-A- 5 198 489

## Beschreibung

Die vorliegende Erfindung betrifft Bindemittel für anorganische Materialpulver, diese Bindemittel enthaltende thermoplastische Massen für die Herstellung anorganischer Formkörper, Verfahren zu ihrer Herstellung, ihre Verwendung und Verfahren zur Herstellung von Formkörpern daraus.

Keramische Formkörper können durch Spritzgießen von thermoplastischen Massen hergestellt werden, die neben Metall- oder Metalloxidpulvern ein organisches Bindemittel aufweisen. Es handelt sich um hochgefüllte organische Polymerformmassen. Nach dem Spritzgießen, Extrudieren oder Verpressen der thermoplastischen Masse zu einem Grünkörper wird das organische Bindemittel entfernt, und der erhaltene entbinderte Grünkörper wird gesintert.

EP-A-0 465 940 betrifft derartige thermoplastische Massen für die Herstellung metallischer Formkörper, die neben einem sinterbaren pulverförmigen Metall oder einer pulverförmigen Metalllegierung oder deren Mischungen eine Mischung aus Polyoxymethylenhomo- oder copolymerisaten und einem damit nicht mischbaren Polymerisat als Bindemittel enthalten. Als zusätzliches Polymerisat kommen Polyolefine, insbesondere Polyethylen und Polypropylen, wie auch Polymerisate von Methacrylsäureestern wie PMMA in Betracht. Die Entbinderung kann durch Behandlung in einer gasförmigen säurehaltigen Atmosphäre bei erhöhter Temperatur erfolgen.

DE-A-40 00 278 betrifft ein Verfahren zur Herstellung eines anorganischen Sinterformteils. Dazu wird ein Gemisch aus einem sinterbaren anorganischen Pulver und Polyoxymethylen als Bindemittel zu einem Grünkörper verformt. Das Bindemittel wird durch Behandeln des Grünkörpers mit einer gasförmigen, Bortrifluorid enthaltenden Atmosphäre entfernt. Anschließend wird der so behandelte Grünkörper versintert. Beispiele für sinterfähige Pulver sind oxidische Keramikpulver wie Al₂O₃, ZrO₂, Y₂O₃, wie auch nicht-oxidische Keramikpulver wie SiC, Si₃N₄.

Die verwendeten Bindemittelsysteme lassen sich jedoch nicht in allen Fällen völlig rückstandsfrei entfernen.

Ein weiterer Nachteil der bekannten Bindemittel kann in ihrer nicht immer zufriedenstellenden Fließfähigkeit liegen, sofern sie zu hoch gefüllten thermoplastischen Massen verarbeitet wurden. Insbesondere bei komplexen Spritzgußteilen kann sich hierdurch unter Umständen eine mangelnde Ausfüllung der Form ergeben.

Aufgabe der vorliegenden Erfindung ist daher die Bereitstellung eines verbesserten Bindemittels für anorganische Materialpulver, das die Nachteile der bekannten Bindemittel vermeidet. Insbesondere soll es bei der Restentbinderung rückstandsfrei entfernbar sein, auch in den Fällen, in denen die bekannten Bindemittel unzureichend sind. Zudem soll es eine hohe Fließfähigkeit aufweisen.

Die Aufgabe wird erfindungsgemäß gelöst durch ein Bindemittel B für anorganische Materialpulver, enthaltend eine Mischung aus
b1 80 bis 99,5 Gew.-% eines Polyoxymethylenhomo- oder copolymerisats B1 und
b2 0,5 bis 20 Gew.-% eines mit B1 nicht mischbaren Polymersystems B2 aus
b21 10 bis 90 Gew.-% Polytetrahydrofuran B21 mit einen Molekulargewicht von 500-2500 und
b22 10 bis 90 Gew.-% mindestens eines Polymers B22 aus C₂-₈-Olefinen, vinylaromatischen Monomeren, Vinylestern aliphatischer C₁₋₈-Carbonsäuren, Vinyl-C₁₋₈-alkylethern oder C₁₋₁₂-Alkyl(meth)acrylaten, oder Gemischen davon.

Es wurde erfindungsgemäß gefunden, daß durch Mitverwendung von Polytetrahydrofuran in Polyoxymethylenhomo- oder copolymerisate enthaltenden Bindemitteln diese eine verbesserte Fließfahigkeit aufweisen und bei der Entbinderung rückstandsfrei entfernt werden können. So lassen sich insbesondere komplex geformte Spritzgußkörper problemlos herstellen und entbindern. Der Aufwand für eine Reinigung der Sinteröfen entfällt.

Die einzelnen Komponenten des Bindemittels B werden im folgenden näher beschrieben.

Als Komponente B1 werden Polyoxymethylenhomo- oder copolymerisate in einer Menge von 80 bis 99,5 Gew.-%, vorzugsweise 85 bis 98 Gew.-%, bezogen auf die Gesamtmenge des Bindemittels B, eingesetzt.

Die Polyoxymethylenhomo- oder copolymerisate sind an sich bekannt. Die Homopolymere werden im allgemeinen durch Polymerisation von Formaldehyd
oder Trioxan hergestellt, vorzugsweise in Gegenwart von geeigneten Katalysatoren.

Erfindungsgemäß bevorzugte Polyoxymethylencopolymere enthalten neben den wiederkehrenden Einheiten -OCH₂- noch bis zu 50, vorzugsweise 0,1 bis 20 und insbesondere 0,3 bis 10 mol-% an wiederkehrenden Einheiten der Formel -O-CR¹R²-CR³R⁴- (R⁵-)ₙ-, wobei R¹ bis R⁴ unabhängig voneinander Wasserstoffatome, C₁₋₄-Alkylreste oder Halogensubstituierte C₁₋₄-Alkylreste bedeuten. R⁵ bedeutet eine Einheit CH₂-, CH₂O-, eine durch C₁₋₄-Alkyl oder Halogen substituierte C₁₋₄-Alkyl-substituierte Methylengruppe oder eine entsprechende Oxymethylengruppe. n hat einen Wert im Bereich von 0 bis 3. Vorzugsweise können diese Gruppen durch Ringöffnung von zyklischen Ethern in die Copolymere eingeführt werden. Bevorzugte zyklische Ether sind in EP-A-0 465 940 genannt. Beispiele dafür sind Ethylenoxid, 1,2-Propylenoxid, 1,2-Butylenoxid, 1,3-Butylenoxid, 1,3-Dioxan, 1,3-Dioxolan und Dioxepan. Zudem können lineare Oligo- oder Polyformale wie Polydioxolan oder Polydioxepan als Comonomere genannt werden. Zudem können Oxymethylenterpolymerisate eingesetzt werden, die beispielsweise durch Umsetzung von Trioxan mit einem der vorstehend beschriebenen zyklischen Ether und mit einer Bisglycidyl-Verbindung erhalten werden können, wie sie in EP-A-0 465 940 beschrieben sind. Bevorzugte Monomere dieser Art sind Ethylendiglycid, Diglycidylether und Diether aus Glycidylen und Formaldehyd, Dioxan oder Trioxan im Molverhältnis 2:1 sowie Diether aus 2 Mol Glycidylverbindung und 1 Mol eines aliphatischen Diols mit 2 bis 8 C-Atomen wie Diglydylether von Ethylenglycol, 1,4-Butandiol, 1,3-Butandiol, Cyclobutan-1,3-diol, 1,2-Propandiol und Cyclohexan-1,4-diol.

Verfahren zur Herstellung der Polyoxymethylenhomo- und copolymerisate sind dem Fachmann bekannt.

Die bevorzugten Polyoxymethylenhomo- oder -copolymerisate haben Schmelzpunkte von mindestens 150°C und Molekulargewichte (Gewichtsmittelwert) im Bereich von 5.000 bis 150.000, vorzugsweise von 7.000 bis 60.000.

Als Komponente B2 werden mit der Komponente B1 nicht mischbare Polymersysteme in einer Menge von 0,5 bis 20 Gew.-%, bevorzugt 2 bis 15 Gew.-%, bezogen auf das Bindemittel B eingesetzt.

Das Polymersystem B2 wiederum ist aus 10 bis 90 Gew.-%, Polytetrahydrofuran als Komponente B21 und 10 bis 90 Gew.-%, mindestens eines Polymers B22 aus C₂₋₈-Olefinen, vinylaromatischen Monomeren, Vinylestern aliphatischer C₁₋₈-Carbonsäuren, Vinyl-C₁₋₈-Alkylethern oder C₁₋₁₂-Alkyl(meth)acrylaten aufgebaut. Es können auch Gemische der Monomere im Polymer B22 vorliegen. Die Mengen beziehen sich dabei auf das Polymersystem B2.

Das als Komponente B21 eingesetzte Polytetrahydrofuran ist an sich bekannt und kann nach bekannten Verfahren erhalten werden.

Vorzugsweise hat das Polytetrahydrofuran einen Schmelzpunkt von mindestens 15°C. Das Polytetrahydrofuran hat ein Molekulargewicht (Gewichtsmittelwert) im Bereich von 500 bis 2500, vorzugsweise von 1000 bis 2000.

Die Komponente B22 ist bevorzugt ausgewählt aus Polymeren von C₂₋₈-Olefinen, bevorzugt C₂₋₄-Olefinen wie Ethylen und Propylen, vinylaromatischen Monomeren wie Styrol und α-Methylstyrol, Vinylestern aliphatischer C₁₋₈-Carbonsäuren wie Vinylacetat und Vinylpropionat, Vinyl-C₁₋₈-Alkylethern wie Vinylmethylether und Vinylethylether und C₁₋₁₂-Alkyl(meth)acrylaten wie Methylmethacrylat oder Ethylmethacrylat. Bevorzugt ist die Komponente B22 mindestens ein Polymer von Ethylen, Propylen oder Ethylmethacrylat.

Die Polymere der Komponente B22 können nach an sich bekannten Polymerisationsverfahren, vorzugsweise radikalisch, beispielsweise durch Emulsions-, Perl-, Lösungs- oder Substanzpolymerisation hergestellt werden. Als Initiator kommen, abhängig von den Monomeren und dem Polymerisationstyp, Radikal-Initiatoren wie Peroxyverbindungen und Azoverbindungen in Betracht, wobei die Initiatormengen im allgemeinen im Bereich von 0,001 bis 0,5 Gew.-%, bezogen auf die Monomeren, liegen. Geeignete Polymerisationsverfahren sind in EP-A-0 465 940 beschrieben.

Die erfindungsgemäßen Bindemittel B werden in thermoplastischen Massen für die Herstellung anorganischer Formkörper eingesetzt. Diese Massen enthalten
a 40 bis 85 Vol-%, vorzugsweise 45 bis 70 Vol-%, mindestens eines anorganischen sinterbaren Pulvers A,
b 15 bis 60 Vol-%, vorzugsweise 29 bis 54 Vol-%, mindestens eines Bindemittels B, wie es vorstehend beschrieben ist,
c 0 bis 7 Vol-%, vorzugsweise 1 bis 4 Vol-%, mindestens eines Dispergierhilfsmittels C,
wobei die Summe der Mengen der Komponenten A, B und C 100 Vol-% ergibt.

Das anorganische sinterbare Pulver A kann aus allen bekannten geeigneten anorganischen sinterbaren Pulvern ausgewählt werden. Vorzugsweise ist es ausgewählt aus Metallpulvern, Metalllegierungspulvern, Metallcarbonylpulvern, keramischen Pulvern und Gemischen davon.

Als Metalle, die in Pulverform vorliegen können, seien beispielsweise Eisen, Kobalt, Nickel und Silicium genannt. Legierungen sind beispielsweise Leichtmetalllegierungen auf der Basis von Aluminium und Titan sowie Legierungen von Kupfer oder Bronze. Auch Hartmetalle wie Wolframcarbid, Borcarbid oder Titannitrid kommen in Kombination mit Metallen wie Kobalt und Nickel in Betracht. Letztere können insbesondere bei der Herstellung von metallgebundenen Hartschneidewerkzeugen (sogenannten Cermets) eingesetzt werden. Geeignete anorganische Pulver sind ferner oxidische Keramikpulver, wie Al₂O₃, ZrO₂, Y₂O₃, aber auch nicht oxidische Keramikpulver wie SiC, Si₃N₄. Geeignete Pulver sind beispielsweise in EP-A-0 465 940, EP-A-0 710 516, DE-A-39 36 869, DE-A-40 00 278 und EP-A-0 114 746 sowie der darin zitierten Literatur beschrieben.

Die Korngrößen der Pulver betragen vorzugsweise 0,1 bis 50 µm, besonders bevorzugt 0,2 bis 8 µm. Die Metallpulver, Metalllegierungspulver, Metallcarbonylpulver oder keramischen Pulver können auch im Gemisch eingesetzt werden.

Aufgrund der hohen Fließfähigkeit des erfindungsgemäßen Bindemittels ist eine hohe Beladung des Bindemittels mit dem Pulver A möglich, ohne daß die Fließfähigkeit zu stark beeinträchtigt wird.

Das als Komponente C gegebenenfalls vorliegende Dispergierhilfsmittel kann aus bekannten Dispergierhilfsmitteln ausgewählt sein. Beispiele sind oligomeres Polyethylenoxid mit einem mittleren Molekulargewicht von 200 bis 600, Stearinsäure, Stearinsäureamid, Hydroxystearinsäure, Fettalkohole,

Fettalkoholsulfonate und Blockcopolymere von Ethylen- und Propylenoxid, wie auch besonders bevorzugt Polyisobutylen. Besonders bevorzugt wird Polyisobutylen in einer Menge von 1 bis 6 Vol-%, bezogen auf die Komponenten A, B und C, eingesetzt.

Zusätzlich können die thermoplastischen Massen auch übliche Zusatzstoffe und Verarbeitungshilfsmittel, die die rheologischen Eigenschaften der Mischungen bei der Verformung günstig beeinflussen, enthalten.

Die Herstellung der erfindungsgemäßen thermoplastischen Massen erfolgt erfindungsgemäß durch Aufschmelzen der Komponente B und Einmischen der Komponenten A und gegebenenfalls C. Beispielsweise kann die Komponente B in einem Zweischneckenextruder bei Temperaturen von vorzugsweise 150 bis 220°C, insbesondere 170 bis 200°C aufgeschmolzen werden. Die Komponente A wird anschließend bei Temperaturen im gleichen Bereich in der erforderlichen Menge zu dem Schmelzestrom der Komponente B dosiert. Vorteilhafterweise enthält die Komponente A auf der Oberfläche das oder die Dispergierhilfsmittel C.

Eine besonders bevorzugte Vorrichtung zur Dosierung der Komponente A enthält als wesentliches Element eine in einem heizbaren Metallzylinder befindliche Förderschnecke, die die Komponente A in die Schmelze der Komponente B fördert.

Das vorstehend beschriebene Verfahren hat gegenüber der Mischung der Komponenten bei Raumtemperatur und anschließender Extrusion unter Temperaturerhöhung den Vorteil, daß eine Zersetzung des als Bindemittel eingesetzten Polyoxymethylens infolge der bei dieser Variante auftretenden hohen Scherkräfte weitgehend vermieden wird.

Die erfindungsgemäßen thermoplastischen Massen können zur Herstellung von Formkörpern aus dem Pulver A verwendet werden. Dabei handelt es sich insbesondere um metallische oder keramische Formkörper, wobei es sich bei den metallischen Formkörpern auch um Formkörper aus Metalllegierungen handeln kann.

Die vorliegende Erfindung betrifft auch ein Verfahren zur Herstellung von Formkörpern aus den beschriebenen Pulvern A durch
1) Verförmen einer thermoplastischen Masse, wie sie vorstehend beschrieben ist, durch Spritzgießen, Extrudieren oder Verpressen zu einem Grünkörper,
2) Entfernen des Bindemittels durch Behandeln des Grünkörpers bei einer Temperatur im Bereich von 20 bis 180°C für 0,1 bis 24 Stunden mit einer gasförmigen säurehaltigen Atmosphäre,
3) nachfolgendes Erhitzen für 0,1 bis 12 Stunden auf eine Temperatur im Bereich von 250 bis 500°C und
4) nachfolgend Sintern des so erhaltenen entbinderten Grünkörpers.

Für die Verformung durch Spritzguß können die üblichen Schnecken- und Kolbenspritzgußmaschinen eingesetzt werden. Die Verformung erfolgt im allgemeinen bei Temperaturen von 175 bis 200°C und Drücken von 3.000 bis 20.000 kPa in Formen, die eine Temperatur von 60 bis 120°C aufweisen.

Die Extrusion zu Rohren, Stangen und Profilen erfolgt vorzugsweise bei Temperaturen von 170 bis 200°C.

Zur Entfernung des Bindemittels werden die nach der Verformung erhaltenen Grünkörper mit einer gasförmigen, säurehaltigen Atmosphäre behandelt. Entsprechende Verfahren sind beispielsweise in DE-A-39 29 869 und DE-A-40 00 278 beschrieben. Diese Behandlung erfolgt erfindungsgemäß vorzugsweise bei Temperaturen im Bereich von 20 bis 180°C über einen Zeitraum von vorzugsweise 0,1 bis 24 Stunden, besonders bevorzugt 0,5 bis 12 Stunden.

Geeignete Säuren für die Behandlung in dieser ersten Stufe des erfindungsgemäßen Verfahrens sind beispielsweise anorganische, bei Raumtemperatur bereits gasförmige, zumindest aber bei der Behandlungstemperatur verdampfbare Säuren. Beispiele sind Halogenwasserstoffsäuren und Salpetersäure. Geeignete organische Säuren sind solche, die bei Normaldruck eine Siedetemperatur von weniger als 130°C aufweisen, wie Ameisensäure, Essigsäure oder Trifluoressigsäure und deren Mischungen.

Weiterhin können als Säure BF₃ und dessen Addukte an anorganische Ether eingesetzt werden. Die erforderliche Behandlungsdauer hängt von der Behandlungstemperatur und der Konzentration der Säure in der Behandlungsatmosphäre wie auch von der Größe des Formkörpers ab.

Wird ein Trägergas verwendet, so wird dies im allgemeinen vorher durch die Säure geleitet und mit dieser beladen. Das so beladene Trägergas wird dann auf die Behandlungstemperatur gebracht, die zweckmäßigerweise höher als die Beladungstemperatur ist, um eine Kondensation der Säure zu vermeiden. Bevorzugt wird die Säure über eine Dosiereinrichtung dem Trägergas zugemischt und die Mischung soweit erwärmt, daß die Säure nicht mehr kondensieren kann.

Die Säurebehandlung wird vorzugsweise solange durchgeführt, bis der Polyoxymethylenanteil des Bindemittels zumindestens 80 Gew.-%, vorzugsweise mindestens 90 Gew.-% entfernt ist. Dies läßt sich beispielsweise anhand der Gewichtsabnahme überprüfen. Anschließend wird das so erhaltene Produkt vorzugsweise für 0,1 bis 12, besonders bevorzugt 0,3 bis 6 Stunden auf eine Temperatur von vorzugsweise 250 bis 700°C, besonders bevorzugt 250 bis 600 °C erhitzt, um den vorhandenen Rest des Bindemittels vollständig zu entfernen.

Das so vom Bindemittel befreite Produkt kann in üblicher Weise durch Sintern in den gewünschten Formkörper, insbesondere metallischen oder keramischen Formkörper überführt werden.

Die erfindungsgemäßen thermoplastischen Massen weisen neben der rückstandsfreien Entbinderung, der hohen Fließfähigkeit und hohen Beladbarkeit mit den Pulvern A zudem den Vorteil auf, daß die daraus hergestellten Grünkörper bzw. metallischen oder keramischen Formkörper auch bei großen Wandstärken frei von Rissen und Poren sind. Zudem liegt ein Vorteil darin, daß die Entfernung des Bindemittels in zwei Stufen erfolgen kann. Zunächst wird das Polyoxymethylen bei relativ niedrigen Temperaturen durch hydrolytischen Abbau wird das Polyoxymethylen bei relativ niedrigen Temperaturen durch hydrolytischen Abbau entfernt, wobei der größte Teil des Polymersystems B2 verbleibt. Die danach erhaltenen Produkte (Weißkörper) sind relativ stabil und können problemlos gehandhabt oder transportiert werden. Die Entfernung des Restes des Polymersystems B2 kann dann bei erhöhten Temperaturen erfolgen.

Die Erfindung wird nachstehend anhand von Beispielen näher erläutert.

### Beispiele

In den nachfolgenden Beispielen wurden unterschiedliche Polyoxymethylen enthaltende Bindemittel eingesetzt. Die Masse 1B wies die folgende Zusammensetzung auf:
56, 5 Vol-% einer Mischung aus 92 Gew.-% Carbonyleisen und 8 Gew.-% Carbonylnickel
37,3 Vol-% Polyoximethylen
6,2 Vol-% Polyolefin

Die zweite Masse 2B wies die folgende Zusammensetzung auf:
64,8 Vol-% eines vorlegierten Pulvers der Legierung 316L
32,5 Vol-% Polyoximethylen
2,7 Vol-% Polyolefin

Zudem wurde folgende Masse 3B untersucht, die zur Herstellung von Keramiken dient:
81,6 Gew.-% Zirkonoxid
14,2 Gew.-% Polyoximethylen
1,7 Gew.-% Dispergator

In diesen Basismaterialien nach dem Stand der Technik wurden in den folgenden Versuchen unterschiedliche Mengen der neben Polyoxymethylen vorliegenden Polymersysteme durch Polytetrahydrofuran ersetzt. In den nachfolgenden Tabellen ist angegeben, welcher Gewichtsanteil (in Gew.-%) der Menge des neben Polyoxymethylen vorliegenden Polymersystems durch Polytetrahydrofuran (PTHF) ersetzt wurde. Sodann wurde die Fließfähigkeit bestimmt. Als Maß für die Fließfähigkeit wurde der sogenannte Schmelzindex (MFI) herangezogen. Der Schmelzindex wurde bei 190°C mit einer Belastung von 21,9 kg bzw. 10 kg in Nr. V9 und 10 bestimmt.

Die unterschiedlichen Zusammensetzungen sind in der nachstehenden Tabelle aufgeführt.

**Tabelle 1**

| Nr | Zusammensetzung | Bemerkung | MFI [g/10 min] |
|---|---|---|---|
| V1 | 1B | POM + weitere Polymere (P) | 200 - 400 (typisch) |
| 2* | 1B + PTHF | Gesamte Menge (P) durch PTHF ersetzt | 2139 |
| 3 | 1B + 0,3 PTHF | ca. 30 % der Menge (P) durch PTHF ersetzt, Rest POM | 540 |
| 4 | 1B + 0,17 PTHF | ca. 17 % der Menge (P) durch PTHF ersetzt, Rest POM | 297 |
| V5 | 2B | POM + weitere Polymere (P) | 400 - 600 (typisch) |
| 6 | 2B + 0,75 PTHF | ca. 75 % der Menge (P) durch PTHF ersetzt, Rest POM | 1614 |
| 7 | 2B + 0,5 PTHF | ca. 50 % der Menge (P) durch PTHF ersetzt, Rest POM | 917 |
| 8 | 2B + 0,4 PTHF | ca. 40 % der Menge (P) durch PTHF ersetzt, Rest POM | 518 |
| V9 | 3B | POM + weitere Polymere (P) | 43 |
| 10* | 3B | Gesamte Menge (P) durch PTHF ersetzt, Rest POM | 66 |

| | | | |
|---|---|---|---|
| *: nicht erfindungsgemäß | | | |

Die Ergebnisse aus Tabelle 1 zeigen, daß die Fließfähigkeit um ein Mehrfaches steigt, wenn die gleiche oder eine ähnlich große Menge des neben Polyoxymethylen vorliegenden Polymersystems durch PTHF ersetzt wird.

### Untersuchung der Fließfähigkeit

Um einen möglichst praxisnahen Vergleich der Fließfähigkeit und damit der Verarbeitbarkeit der erfindungsgemäßen thermoplastischen Massen zu ermöglichen, wurde ein Teil der vorstehenden Massen mit einer sogenannten Fließspirale getestet. Dabei handelt es sich um ein Werkzeug mit einem spiralförmigen Fließweg. Dieses Spritzgußwerkzeug wurde auf einer handelsüblichen Spritzgußmaschine (Engel cc 90) unter Standardbedingungen abgespritzt. Dabei wurden die Spritzbedingungen wie Zylinder- und Düsentemperatur, Plastifizierzeit, Einspritzgeschwindigkeit und Werkzeugtemperatur unverändert gehalten, um den unter identischen Bedingungen zurückgelegten Weg des Materials bestimmen zu können. Dieser zurückgelegte Weg (in cm) ist somit ein praxisnaher Test für die Fließfähigkeit des Materials unter Produktionsbedingungen. Die Ergebnisse sind in der nachstehenden Tabelle 2 zusammengefaßt.

**Tabelle 2**

| Nr. | Zusammensetzung | Fließweg [cm] | Bemerkung |
|---|---|---|---|
| V1 | 1B | 10-13 | letzten 2-3 cm nicht komplett ausgefüllt |
| 3 | 1B + 0,3 PTHF | 20 - 21 | komplett ausgefüllt |
| 4 | 1B + 0,17 PTHF | 16 - 17 | komplett ausgefüllt |
| V5 | 2B | 16 - 17 | letzten 2-3 cm nicht komplett ausgefüllt |
| 6 | 2B + 0,75 PTHF | 19 - 20 | komplett ausgefüllt |
| 8 | 2B + 0,4 PTHF | 21 - 22 | komplett ausgefüllt |

Mit den erfindungsgemäßen thermoplastischen Massen konnte auch unter produktionsähnlichen Bedingungen eine deutliche Verbesserung der Fließfähigkeit erreicht werden. Mit den thermoplastischen Massen, die PTHF enthielten, war zudem ein besseres Ausformen der Fließspirale festzustellen.

### Untersuchung von Ablagerungen im Sinterofen

Hervorgerufen durch die polymeren Bestandteile der Massen 1B und 2B, die während der katalytischen Entbinderung nicht angegriffen werden, kann es beim Aufheizen der spritzgegossenen und entbinderten Teile in Sinterofen mitunter zu erheblichen Verschmutzungen im Sinterofen kommen.

Verantwortlich dafür sind wahrscheinlich die nicht katalytisch entbinderbaren Komponenten der Massen 1B und 2B. Eine solche Verschmutzung trat zum Beispiel mitunter in den Abgasventilen des Ofens auf.

Durch die Verwendung von PTHF als Polymer neben POM konnten solche Verschmutzungen weitestgehend vermieden werden.

## Patentansprüche

1. Bindemittel B für anorganische Materialpulver, enthaltend eine Mischung aus
b1 80 bis 99,5 Gew.-% eines Polyoxymethylenhomo- oder -copolymerisats B 1 und
b2 0,5 bis 20 Gew.-% eines mit B1 nicht mischbaren Polymersystems B2 aus
b21 10 bis 90 Gew.-% Polytetrahydrofuran B21 mit einem Molekulargewicht von 500 bis 2500 und
b22 10 bis 90 Gew.-% mindestens eines Polymers B22 aus C₂₋₈-Olefinen, vinylaromatischen Monomeren, Vinylestern aliphatischer C₁₋₈-Carbonsäuren, Vinyl-C₁₋₈-alkylethern oder C₁₋₁₂-Alkyl(meth)acrylaten oder Gemischen davon.

2. Bindemittel nach Anspruch 1, **dadurch gekennzeichnet, daß** die Mischung 85 bis 98 Gew.-% der Komponente B1 und 2 bis 15 Gew.-% der Komponente B2 enthält.

3. Bindemittel nach Anspruch 1 oder 2, **dadurch gekennzeichnet, daß** die Komponente B22 mindestens ein Polymer von Ethylen, Propylen oder Methyl(meth)acrylat ist.

4. Thermoplastische Masse für die Herstellung anorganischer Formkörper, enthaltend,
a 40 bis 85 Vol-% mindestens eines anorganischen sinterbaren Pulvers A,
b 15 bis 60 Vol-% mindestens eines Bindemittels B gemäß einem der Ansprüche 1 bis 4,
c 0 bis 5 Vol-% mindestens eines Dispergierhilfsmittels C,
wobei die Summe der Mengen der Komponenten A, B und C 100 Vol-% ergibt.

5. Thermoplastische Masse nach Anspruch 4, **dadurch gekennzeichnet, daß** das Pulver A ausgewählt ist aus Metallpulvern, Metalllegierungspulvern, Metallcarbonylpulvern, keramischen Pulvern und Gemischen davon.

6. Verfahren zur Herstellung von thermoplastischen Massen nach Anspruch 4 oder 5 durch Aufschmelzen der Komponente B und Einmischen der Komponenten A und gegebenenfalls C.

7. Verwendung von thermoplastischen Massen nach Anspruch 4 oder 5 zur Herstellung von Formkörpern aus dem Pulver A.

8. Verwendung nach Anspruch 7 zur Herstellung von metallischen oder keramischen Formkörpern.

9. Verfahren zur Herstellung von Formkörpern aus Pulvern A durch
(1) Verformen einer thermoplastischen Masse gemäß Anspruch 4 oder 5 durch Spritzgießen, Extrudieren oder Verpressen zu einem Grünkörper,
(2) Entfernen des Bindemittels durch Behandeln des Grünkörpers bei einer Temperatur im Bereich von 20 bis 180°C für 0,1 bis 24 Stunden mit einer gasförmigen säurehaltigen Atmosphäre,
(3) Nachfolgendes Erhitzen für 0,1 bis 12 Stunden auf eine Temperatur im Bereich von 250 bis 500°C und
(4) nachfolgend Sintern des so erhaltenen entbinderten Grünkörpers.

## Claims

1. A binder B for inorganic powders, comprising a mixture of
b1 from 80 to 99.5% by weight of a polyoxymethylene homopolymer or copolymer B1 and
b2 from 0.5 to 20% by weight of a polymer system B2 which is not miscible with B1 and comprises
b21 from 10 to 90% by weight of polytetrahydrofuran B21 having a molecular weight (weight average) of from 500 to 2500 and
b22 from 0 to 90% by weight of at least one polymer B22 of C₂₋₈-olefins, vinylaromatic monomers, vinyl esters of aliphatic C₁₋₈-carboxylic acids, vinyl C₁₋₈-alkyl ethers or C₁₋₁₂-alkyl (meth) acrylates or mixtures thereof.

2. A binder as claimed in claim 1, wherein the mixture comprises from 85 to 98% by weight of component B1 and from 2 to 15% by weight of component B2.

3. A binder as claimed in claim 1 or 2, wherein the component B22 is at least one polymer of ethylene, propylene or methyl (meth)acrylate.

4. A thermoplastic composition for producing shaped inorganic bodies, comprising
a from 40 to 85% by volume of at least one sinterable inorganic powder A,
b from 15 to 60% by volume of at least one binder B as claimed in any of claims 1 to 4,
c from 0 to 5% by volume of at least one dispersant C,
where the sum of the amounts of components A, B and C is 100% by volume.

5. A thermoplastic composition as claimed in claim 4, wherein the powder A is selected from among metal powders, metal alloy powders, metal carbonyl powders, ceramic powders and mixtures thereof.

6. A process for preparing thermoplastic compositions as claimed in claim 4 or 5 by melting the component B and mixing-in the components A and, if desired, C.

7. The use of a thermoplastic composition as claimed in claim 4 or 5 for producing shaped bodies from the powder A.

8. The use as claimed in claim 7 for producing shaped metallic or ceramic bodies.

9. A process for producing shaped bodies from powders A by
(1) shaping a thermoplastic composition as claimed in claim 4 or 5 by injection molding, extrusion or pressing to form a green body,
(2) removing the binder by treating the green body at from 20 to 180°C with a gaseous acid-containing atmosphere for from 0.1 to 24 hours,
(3) subsequently heating at from 250 to 500°C for from 0.1 to 12 hours and
(4) subsequently sintering the binder-free green body obtained in this way.

## Revendications

1. Liant B pour matériau pulvérulent inorganique, contenant un mélange
b1 de -80 à 99,5% en poids d'un homopolymère ou copolymère de polyoxyméthylène B1, et
b2 de 0,5 à 20% en poids d'un système polymère B2 non miscible à B1, à base
b21 de 10 à 90% en poids de polytétrahydrofuranne B21 présentant un poids moléculaire (valeur moyenne pondérale) de 500 à 2.500, et
b22 de 10 à 90% en poids d'au moins un polymère B22 à base d'oléfines en C₂-C₈, de monomères vinylaromatiques, d'esters vinyliques d'acides carboxyliques aliphatiques en C₁-C₈, d'éthers vinyl-C₁-C₈-alkyliques, ou de (méth)acrylates d'alkyle en C₁-C₁₂ ou de leurs mélanges.

2. Liant suivant la revendication 1, **caractérisé en ce que** le mélange contient 85 à 98% en poids du composant B1 et 2 à 15% en poids du composant B2.

3. Liant suivant l'une des revendications 1 et 2, **caractérisé en ce que** le composant B22 est au moins un polymère d'éthylène, de propylène ou de (méth)acrylate de méthyle.

4. Masse thermoplastique pour la préparation de corps façonnés inorganiques, contenant
a 40 à 85% en volume d'au moins une poudre A inorganique, frittable,
b 15 à 60% en volume d'au moins un liant B suivant l'une des revendications 1 à 4,
c 0 à 5% en volume d'au moins un adjuvant de dispersion C,
la somme des quantités des composants A, B et C donnant 100% en volume.

5. Masse thermoplastique suivant la revendication 4, **caractérisée en ce que** la poudre A est choisie parmi des poudres métalliques, des poudres d'alliages métalliques, des poudres de métal-carbonyle, des poudres céramiques et leurs mélanges.

6. Procédé de préparation de masses thermoplastiques suivant l'une des revendications 4 et 5, par fusion du composant B et incorporation par mélange du composant A et éventuellement du composant C.

7. Utilisation de masses thermoplastiques suivant l'une des revendications 4 et 5, pour la fabrication de corps façonnés à base de la poudre A.

8. Utilisation suivant la revendication 7, pour la fabrication de corps façonnés métalliques ou céramiques.

9. Procédé de préparation de corps façonnés à base de poudres A par
(1) formage d'une masse thermoplastique suivant l'une des revendications 4 et 5, par coulage par injection, extrusion ou pressage en un corps cru,
(2) élimination du liant par traitement du corps cru à une température de l'ordre de 20 à 180°C pendant 0,1 à 24 heures, avec une atmosphère gazeuse contenant de l'acide,
(3) chauffage ultérieur pendant 0,1 à 12 heures à une température de l'ordre de 250 à 500°C, et
(4) frittage ultérieur du corps cru débarrassé de liant ainsi obtenu.
